# EUROPÄISCHE PATENTSCHRIFT

(11) **EP 0 814 132 B1**
(45) Veröffentlichungstag und Bekanntmachung des Hinweises auf die Patenterteilung: **28.11.2001**
(21) Anmeldenummer: 97106249.2
(22) Anmeldetag: 16.04.1997
(51) Int. Cl.: C09B 67/00, C09D 5/29, C09K 19/00, B44D 5/00, C09D 5/36

(54) **Interferenzpigmente für Effektlacke, daraus hergestellter Lack sowie damit applizierte Lackierung**
Interference pigments for effect lacquers, lacquers containing them and lacquerings obtained therewith
Pigments d'interférence pour laques à effets, laques en contenant et laquages obtenus avec elles

(30) Priorität: 17.05.1996 DE 19619973
(43) Veröffentlichungstag der Anmeldung: 29.12.1997
(73) Patentinhaber: DaimlerChrysler AG, 70567 Stuttgart (DE)
(72) Erfinder: Gailberger, Michael, Dr., 89231 Neu-Ulm (DE); Strelzyk, Katja, 89075 Ulm (DE); Holdik, Karl, Dr., 89081 Ulm (DE); Dannenhauer, Fritz, Dr., 89075 Ulm (DE); Grosse, Erik, 89077 Ulm (DE); Stohr, Andreas, 95448 Bayreuth (DE)

(56) Entgegenhaltungen:
- EP-A- 0 383 376
- WO-A-95/29961
- DE-A- 4 240 743
- DE-A- 4 416 191
- DE-A- 4 418 075
- DE-A- 4 418 490
- DE-A- 4 430 919

## Beschreibung

Die Erfindung betrifft Interferenzpigmente, ein Herstellungsverfahren dafür, mit den Interferenzpigmenten formulierte Effektlacke sowie damit applizierte Lackierung.

In dem Bemühen um brillante oder effektvolle Farbeindrücke insbesondere bei Fahrzeugkarosserien hat man die sog. Effektlacke entwickelt. Die EP 383 376 A1 beschreibt einen solchen Effektlack, bei dem kleine Glimmerplättchen allseits gleichmäßig mit einem vernetzten, flüssigkristallinen Polymer (LCP) in chiralnematischer Anordnung der Mesogene beschichtet sind. Die Farberscheinung derartiger Pigmente kommt durch eine Interferenzerscheinung zustande. Von der LCP-Schicht werden diejenigen Lichtwellen des einfallenden Lichtes reflektiert, deren Wellenlänge mit den äquidistanten Netzebenenabständen der flüssigkristallinen Polymere interferieren, wogegen die Lichtanteile anderer Wellenlängen durch den durchsichtigen Lack-Körper hindurchgehen und von der Oberfläche des Glimmerplättchens zum Teil ebenfalls reflektiert und zum anderen Teil absorbiert werden. Da die Lichtabsorption aufgrund der Transparenz der Glimmerplättchen nur gering ist, wird der interferentielle Farbeffekt bei dieser Art von Interferenzpigmenten im wesentlichen durch die Absorptionswirkung des Untergrundes bestimmt; dazu näheres weiter unten. Darüber hinaus ist das gleichmäßige und allseitige Beschichten kleiner Glimmerpartikel mit einem LCP-Belag, ohne daß die Pigmente dabei verklumpen, sehr aufwendig, wodurch sich der Effektlack und dementsprechend die Effektlackierung auf dem Gebrauchsgegenstand recht kostspielig gestalten.

Beispielsweise durch die EP 601 483 B1 (entspricht DE 42 40 743 A1), die DE 44 18 075 A1 oder die DE 44 18 076 A1 ist die Herstellung von Interferenzpigmenten aus flüssigkristallinen Polymeren bekannt, die eine intensiveren interferentiellen Farbeffekt bewirken und sich auch einfacher herstellen lassen. Diese Interferenzpigmente bestehen jeweils als Ganzes aus kleinen Bruchstücken einer dünnen vernetzten, farblosen und klar durchsichtigen Folie aus flüssigkristallinen Polymeren. Die mit ihnen erzielbare Farbwirkung beruht auf der regelmäßigen Struktur und der gleichmäßigen Anordnung der Moleküle in Form eines Flüssigkristalls und auf einer darauf zurückzuführenden Interferenz eines bestimmten spektralen Lichtanteiles, für den das Pigment reflektiv wirkt. Die anderen Lichtanteile gehen durch das Pigment hindurch. Dadurch lassen sich verblüffende Farbeffekte unterschiedlicher Art erzielen, je nach Ausgestaltung der Lackierung bzw. der Interferenzpigmente und deren Mischung. Der Farbgrundton der Interferenzpigmente ist bestimmt durch den Farbeindruck bzw. die Farbe, die sich bei senkrechter Beleuchtung der lakkierten Oberfläche und senkrechter Betrachtung einstellt. Nachdem bei schräg zur Oberfläche gerichtetem Strahlengang die Netzebenenabstände - geometrisch bedingt - gegenüber der orthogonalen Strahlrichtung verändert erscheinen, verschiebt sich der Farbeindruck in Richtung zu einer im Farbspektrum in Richtung zu kürzeren Wellenlängen versetzt liegenden, anderen Farbe, und zwar hängt dies von der relativen Betrachtungsrichtung der Oberfläche ab. Je nach Lage einer bestimmten Oberflächenpartie zum Strahlengang des Betrachters erscheint die Oberflächenpartie in der Grundfarbe oder in der anderen kürzerwelligen Farbe. Beispielsweise können Interferenzpigmente der Grundfarbe Rot in die Farbe Grün umschlagen; mit anderen Interferenzpigmenten ist ein Farbumschlag zwischen grün und blau darstellbar.

Die Intensität der dabei wahrnehmbaren Farben ist um so stärker, je dunkler die Farbe des Untergrundes ist, der die farbbestimmende Lacklage trägt, wobei der Farbton des Untergrundes allerdings durch absorptiv wirkende Farbpigmente bestimmt sein muß. Und zwar beruht dies darauf, daß die durch die Interferenzpigmente hindurchgehenden Lichtanteile vom dunklen Untergrund mehr oder weniger vollständig absorbiert werden, und zwar um so mehr, je dunkler der Untergrund ist.

Die Interferenzpigmente der angesprochenen Art werden gewonnen, indem die Polymere aus dem flüssigen oder flüssigkristallinen Zustand heraus auf eine glatte Unterlage, beispielsweise auf eine polierte Walze aufgerakelt werden, wodurch ein dünner Film gebildet wird. Durch den Rakelvorgang kommt es zu einer Ausrichtung der Moleküle innerhalb des Filmes, nämlich zu einer homogenen Orientierung; erst nach diesem Ausrichten weist der Film eine Interferenzfarbe auf. Beim Schervorgang der flüssigkristallinen Polymere stellen sich während des Rakelns selbsttätig äquidistante Netzebenen und damit farbselektiv wirkende Beugungsstrukturen ein.

Die bekannten Interferenzpigmente sind - wie gesagt - klar dursichtig und daher nicht deckend. Sie setzen daher einen gleichmäßig getönten Farbuntergrund voraus, um einen gleichmäßigen Farbeindruck zu erzielen. Andererseits kann die Farbe des Untergrundes innerhalb einer größeren Serie von Werkstücken durchaus wechseln, beispielsweise wenn Füllerlacke von unterschiedlichen Herstellern eingesetzt werden, die sich in Ihrem Farbton unterscheiden oder wenn unterschiedlich grundierte Bau- oder Karosserieteile an ein und dem selben Werkstück verarbeitet werden. Vor der Applikation eines - nicht-deckenden - Interferenz-Effektlakkes muß daher sichergestellt sein, daß nicht nur alle Teile eines Werkstückes, sondern auch alle Werkstücke innerhalb einer Serie einheitlichen mit ein und derselben, farblich bestimmten Grundierfarbe lackiert werden, was einen zusätzlichen Lackierund Einbrennvorgang erforderlich macht. Auch im Reparaturfall muß das bezüglich seiner Lackierung auszubessernde Karosserieteil oder sogar die gesamte Karosserie zunächst einheitlich und farblich exakt wie ursprünglich grundiert und diese Grundierung eingebrannt werden. Erst danach kann der Effektlack auf die Reparaturstelle appliziert werden. Dies ist in der Serienanwendung, vor allem aber im Reparaturfall teuer und aufwendig.

In einem gedanklichen Ansatz wäre es vorstellbar, bei der Formulierung eines Effektlackes außer Interferenzpigmenten auch Absorptionspigmente in den Lack einzumischen, um den Lack dadurch farbdeckend zu machen. Allerdings müßte zur Erzielung einer guten Deckwirkung ein so hoher Anteil an Absorptionspigmenten dem Lack zugegeben werden, daß dadurch die Wirkung der Interferenzpigmente sehr stark abgeschwächt wird, weil diese auf gute Transparenz des Lackkörpers angewiesen sind. Wird dem Lack ein nur geringer Anteil an Absorptionspigmenten zugemischt, der die interferentielle Farbwirkung der Interferenzpigmente nur wenig beeinträchtigt, so müßte der Lack zur Erzielung einer ausreichenden Abdeckwirkung in einer so großen Schichtdicke aufgetragen werden, die sich in einem einzigen Applikationsschrit gar nicht auftragen ließe. Ein solcher Lack müßte mindestens in zwei Schritten appliziert werden, was gegenüber einer vorherigen Applikation einer gut deckenden Grundierung keinen Vorteil brächte.

Ausgehend von dem gewürdigten Stand der Technik ist es Aufgabe der Erfindung, die Interferenzpigmente dahingehend zu verbessern, daß sie einerseits zwar einfach herstellbar und in ihrer interferentiellen Farberscheinung kräftig wirksam sind, sich aber andererseits mit ihnen gleichwohl gut deckend wirkende Lakke formulieren lassen.

Diese Aufgabe wird erfindungsgemäß bezüglich der Pigmente durch die Gesamtheit der Merkmale von Anspruch 1 und bezüglich des Herstellungsverfahrens auf zweierlei Weise, nämlich durch die Merkmale von Anspruch 10 oder die von Anspruch 12 gelöst. Aufgrund des Auftragens eines Filmes aus flüssigkristallinen Polymeren auf eine glatte, geometrisch definierte Unterlage kann ein Vorprodukt für die Interferenzpigmente in kostengünstiger Weise hergestellt werden, welches einen·guten interferentiellen Farbeffekt ergibt. Nach dieser Methode kann ein Mehrlagenverbund mit einer lichtabsorbierende Deck- oder Zwischenlage auf oder in der Folie des Pigment-Vorproduktes erzeugt werden, die der Folie bzw. den daraus hergestellten Interferenzpigmenten die erwünschte Deckwirkung verleiht. Absorptionspigmente brauchen zur Erzielung einer Deckwirkung eines mit den erfindungsgemäßen Interferenzpigmenten formulierten Effektlackes nicht zugemischt zu werden. Andererseits steht es dem Lack- bzw. Farbdesigner selbstverständlich frei, zur Erzielung weiterer gewollter Farbwirkungen gleichwohl Absorptionspigmente bestimmter Farbtöne einem Effektlack zuzumischen. Wenn beim Auftragen ein mechanisch unterstützter Schereffekt auf die aufgetragenen flüssigkristallinen Polymere ausgeübt wird, beisapielsweise durch Auifrakeln, so wird wegen der raschen und besonders guten Ausrichtung und gleichmäßigen Anordnung der Mesogene im Film ein sehr guter interferentieller Farbeffekt erzielt.

Weitere zweckmäßige Ausgestaltungen der Erfindung können den jeweiligen Unteransprüchen entnommen werden; im übrigen ist die Erfindung anhand eines in der Zeichnung dargestellten Ausführungsbeispieles nachfolgend noch erläutert; dabei zeigen:
- Fig. 1: eine schematische Darstellung eines Karosserieteiles mit einem ausschnittsweise vergrößerten Querschnitt durch die Bauteilwandung und die Lackierung und
- Fig. 2 und 3: eine Einzeldarstellung eines dreilagigen (Figur 2) bzw. eines zweilagigen (Figur 3) Interferenzpigmentes.

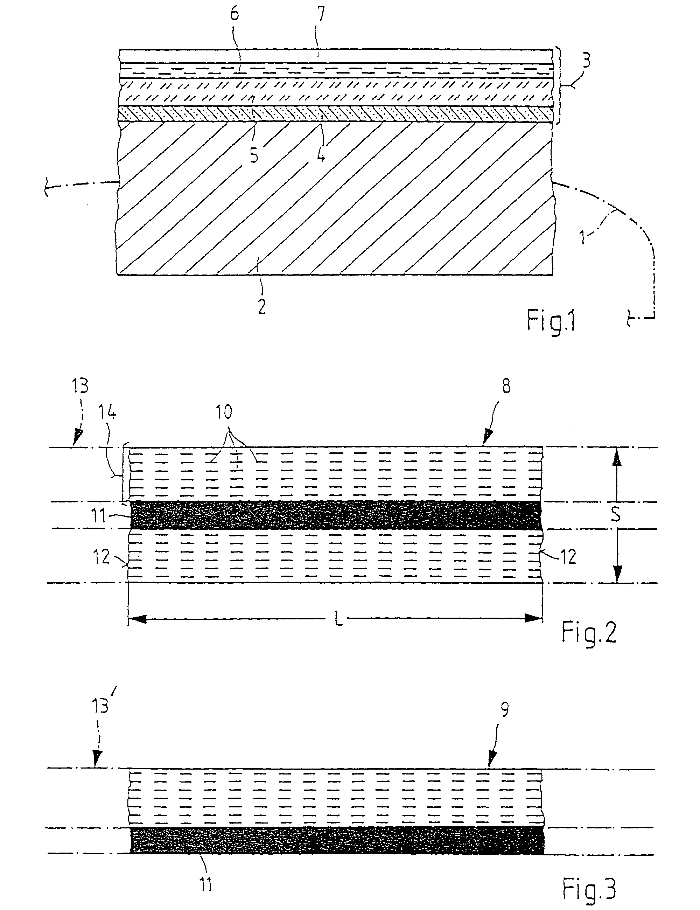

In Figur 1 ist ein Karosserieteil 1 schematisch durch eine strichpunktierte Linie angedeutet und darin ausschnittsweise ein vergrößerter Querschnitt durch das Blech 2 und die mehrlagige-Lackierung 3 gezeigt, wobei die beispielsweise dargestellte Lakkierung aus einer Grundierung 4, einer Füllerlackierung 5, einer Effektlackierung 6 und aus einer Klarlacklage 7 besteht. In die farbbestimmende Lackierungslage des Effektlackes 6 sind plättchenförmige, dreilagig aufgebaute.Interferenzpigmente 8 (Figur 2) oder zweilagige Interferenzpigmente 9 (Figur 3) eingelagert. Ungeachtet der Lagenzahl der Interferenzpigmente ist darin zumindest eine Lage 14 aus flüssigkristallinen Polymeren (LCP) mit Haupt- und/oder Seitengruppen-Mesogenen vorgesehen, die zumindest näherungsweise chiral-nematisch und/oder smektisch und/oder cholesterisch geordnet sind. Es bilden sich beispielsweise regelmäßige Helices 10 in den flüssigkristallinen Polymeren aus, die aufgrund ihrer regelmäßigen Strukturierung mit einem Rastermaß im Bereich der Lichtwellenlänge einer bestimmten Farbe des sichtbaren Lichtes übereinstimmen und dadurch die interferentielle Farbwirkung erzeugen, wobei die Farbe auch von der Richtung des Betrachtungswinkels abhängig ist. Die plättchenförmigen Interferenzpigmente weisen eine Stärke (S) von etwa 3 bis 50 *µ*m und einen Durchmesser (L) von 5 bis 100 *µ*m, vorzugsweise von 10 bis 50 *µ*m auf.

Damit die Interferenzpigmente 8 oder 9 sich einerseits zwar einfach herstellen lassen und sie in ihrer interferentiellen Farberscheinung kräftig wirksam sind, sich aber andererseits mit ihnen gleichwohl gut deckend wirkende Lacke formulieren lassen, ist in die Interferenzpigmente eine lichtabsorbierende Lage 11 eingelagert, die zumindest für ein Teil des sichtbaren Lichtspektrums absorbierend ist. Die Ränder der plättchenförmigen Interferenzpigmente sind als umfangsseitig unbeschichtete Bruchkanten 12 des Mehrlagenverbundes 13 oder 13' ausgebildet.

Die dreilagig, vorzugsweise symmetrisch zur Mittenlage aufgebauten Interferenzpigmente 8 nach Figur 2 mit der mittig im Lagenverbund 13 angeordneten lichtabsorbierenden Lage 11 erfordern zwar einen größeren Herstellungsaufwand als die zweilagigen Interferenzpigmenmte 9 nach Figur 3, die dreilagigen Pigmente haben dafür den Vorteil, daß sie ober- und unterseitig, also in beiden möglichen Relativlagen innerhalb der Lackschicht ihre interferentielle Farbwirkung hervorbringen, wogegen die einfacher herstellbaren, zweilagigen Interferenzpigmenten diese Wirkung nur auf einer Flachseite zeigen. Nach der Wahrscheinlichkeit weisen etwa 50 % der in die Lackschicht 6 eingelagerten Interferenzpigmente 9 mit der interferentiell wirksamen LCP-Seite nach außen, wogegen die andere Hälfte dieser Pigmente mit der Absorptionslage 11 nach außen weist. Dies ergibt eine weniger brillante Farberscheinung der Effektfarbe im Vergleich zum Einsatz von dreilagigen Interferenzpigmenten.

Im allgemeinen wird man für die lichtabsorbierende Lage 11 eine Substanz wählen, die im gesamten sichtbaren Lichtspektrum lichtabsorbierend ist, also schwarz erscheint. Dadurch treten die jeweiligen Effektfarben, unabhängig welche es sind, klar in Erscheinung. Statt dessen ist es auch möglich, für die lichtabsorbierende Lage 11 eine Substanz vorzusehen, die nur innerhalb eines schmalen Teilbereiches des sichtbaren Lichtspektrums lichtabsorbierend ist, die beispielsweise mit einer der beiden Effektfarben der Interferenzpigmente übereinstimmen, z.B. rot oder grün erscheint. Dann erscheint die eine - übereinstimmende - Effektfarbe besonders intensiv, wogegen die andere der beiden Effektfarben als Mischfarbe erscheint. Ferner kann auch eine schmalbandig lichtabsorbierende Substanz für die Lage 11 verwendet werden, die mit keiner der Effektfarben übereinstimmt; es ergeben sich dann bei beiden Effektfarben Mischfarben, die den Farbumschlag zwischen den beiden interferentiellen Effektfarben etwas abmildern, was im Einzelfall u.U. erwünscht sein kann.

Um die erfindungsgemäßen plättchenförmigen Interferenzpigmente in einer dreilagigen Ausgestaltung herzustellen, wird folgendermaßen verfahren: Als flüssigkristalline Polymere (LCP) kommen flüssigkristaline Haupt- oder Seitenketten-Polymere oder Mischungen davon, flüssigkristaline Oligomere oder Oligomermischungen oder flüssigkristaline Monomere oder Monomermischungen in Betracht. Diese LCP's werden in flüssigem Zustand auf eine glatte Unterlage, beispielsweise auf eine Glasplatte, auf einen polierten Stahlzylinder, auf eine glänzend-glatte Folie eines sich gegenüber den aufzutragenden LCP's antiadhäsiv verhaltenden kunststoffes oder auf ein poliertes Metallband, als dünner Film in einer Stärke von etwa 3 bis 15 *µ*m aufgebracht, wobei die Mesogene der LCP's selbsttätig zumindest näherungsweise chiral-nematisch und/oder smektisch und/oder cholesterisch geordnet werden. Das Aufbringen des Filmes auf die Unterlage kann durch Rakeln, Aufwalzen oder auch durch Aufsprühen bewirkt werden. Ein Schervorgang beim Aufbringen des Filmes auf die Unterlage begünstigt eine chiral-nematische oder ähnliche Ausrichtung der Mesogene in dem filmbildenden Polymer. Der solcherart erzeugt dünne Film 14 wird auf der Unterlage ausgehärtet. Nach dem Aushärten des ersten Filmes wird dieser zunächst noch auf der glatten Unterlage belassen und auf diesen Film eine Schicht 11 aus einem lichtabsorbierenden Farbstoff in einer eine bestimmte Absorptionswirkung zu Geltung bringenden Lagenstärke aufgebracht; auch diese Schicht wird anschließend ausgehärtet. Nach dem Aushärten der lichtabsorbierenden Lage wird der zweilagige Lagenverbund zunächst noch weiter auf der glatten Unterlage belassen und darauf eine weitere, nach Zusammensetzung und Lagenstärke mit dem ersten Film übereinstimmender Film aufgebracht und ausgehärtet. Erst anschließend wird dieser dreilagige, ausgehärtete Lagenverbund von der Unterlage abgezogen und in plättchenförmige Partikel zerkleinert, wobei die seitlichen unbeschichteten Bruchkanten 12 entstehen. Nach dem Zerkleinern des mehrlagigen Filmes 13 werden die im Durchmesser (L) kleiner als die Filmstärke (S) messenden Partikel und die im Durchmesser (L) um mehr als das Zehnfache größer als die Filmstärke (S) messenden Partikel durch ein korngrößen-selektives Trennverfahren aussortiert und die übrig bleibenden Partikel als Interferenzpigmente 8 verwendet. Das selektierte Korngrößenspektrum der Interferenzpigmente ist nach unten begrenzt, weil beliebig kleine Pigmente bei der Lackapplikation selbsttätig nicht eine oberflächenparallele Orientierung einnehmen, die für den richtungsabhängigen Farbeffekt wichtig ist. Die Anwesenheit von sehr vielen kleinen Pigmenten würde darüber hinaus eine gewisse Dispersionswirkung erzeugen, die die Farbbrillanz der interferentiell hervorgerufenen Farben beeinträchtigen würde. Zu groß sollten die Pigmente auch nicht sein, da sie sonst Probleme bei den Geräten für die Lackapplikation mit sich bringen würden und weil zu große Pigmente u.U. auch einmal aus der Lackoberfläche herausragen und einen glatten Verlauf der Lackoberfläche beeinträchtigen könnten. Die zu großen und aussortierten Folienbruchstücke können gegenüber dem aussortierten Folienstaub gesondert gesammelt und in den Zerkleinerungsvorgang zurückgegeben werden.

Ein alternatives Verfahren zur Herstellung zwei- oder dreilagiger Interferenzpigmente besteht darin, die Absorptionslage als vorgefertigte folienartige Lage in den Herstellungsprozeß einzuführen, auf ihr die interferentiell wirkenden Lagen ein- oder beidseitig aufzubringen und auszuhärten. Im Falle der beidseitigen Beschichtung dieser Absorptionsfolie werden die Außenbeschichtungen zeitversetzt und nacheinandere aufgebracht und ausgehärtet, wobei der Lagenverbund u.U. nach dem Auftragen und Aushärten der ersten LCP-Lage gewendet wird, so da0 die bisher unten liegende Seite des Lagenverbundes zu oben liegen kommt.

Es ist zu empfehlen, die flüssigkristallinen Polymere für die interferentiell wirkenden Lagen 14 photovernetzbare oder elektronenstrahl-vernetzbare Polymere auszuwählen. Aufgrund des Nicht-Erfordernisses einer thermischen Vernetzung der LCP's auf den Interferenzpigmenten kann erreicht werden, daß die Farbwirkung der Interferenzpigmente sich nicht in unerwünschter Weise durch einen späteren Einbrennvorgang der mit einem solchen Effektlack hergestellten Lackierung verändert. Zwar mag es im Einzelfall LCP's geben die einen solchen Einbrennvorgang mit vernachlässigbar geringer Farbveränderung überstehen, oder es mag auch Anwendungsfälle geben, in denen diese Farbveränderung beherrschbar ist, reproduziert ausfällt und dadurch entsprechend beim Interferenzpigment vorgehalten werden kann, so daß auch thermisch vernetzbare LCP's für die Interferenzpigmente zugelassen werden können. Meist wird man jedoch nicht-thermisch vernetzende LCP's bevorzugen. Auch elektronenstrahl-vernetzbare Polymere sind von Interesse, weil diese nicht auf die Gegenwart von - teuren - Photoinitiatoren angewiesen sind.

Was die optische und geometrische Beschaffenheit der Absorptionslage 11 anlangt, so liegen hierin auch noch gewisse Gestaltungsmöglichkeiten, auf die hingewiesen werden soll. Erwähnt wurde bereits die Absorptionswirkung für das gesamte Spektrum des sichtbaren Lichtes, also eine schwarze Absorptionslage und eine spektral beschränkte Absorptionswirkung, die in einer bestimmten Farbe des Lichtspektrums erscheint, wobei zweckmäßig diese Farbe mit einer der beiden Effektfarben Übereinstimmt. Eine zusätzliche farbdesignerische Gestaltungsmöglichkeit besteht in einer gezielten Auswahl der Lagenstärke der Absorptionslage 11, so daß das Ausmaß der Absorption durch die Schichtdicke der Lage 11 bestimmt wird. Es gibt beispielsweise farblich eingefärbte transparente Beläge oder Folien, die je nach Lagenstärke und/oder dem Grad der Einfärbung mehr oder weniger stark lichtabsorbierend wirken. Demgemäß kann durch Wahl der Schichtdicke der Lage 11 oder durch Wahl eines Einfärbungsgrades dieses Stoffes der Absorptionsgrad bestimmt werden. Dies führt dazu, den Deckgrad der Interferenzpigmente von vollständig deckend bis zu semitransparent einzustellen. Diese Möglichkeit gilt für alle spektralen Bereiche, d.h. sowohl für schwarze als auch für farbige Absorptionslagen.

Der Vollständigkeit halber sei noch erwähnt, daß die Absorptionslage 11 auch aus eine aufgedampften oder gesputterten Metallbelag bestehen kann, die im Fall sehr geringer Lagenstärken eine definierte Absorptionswirkung aufweisen.

Die solcherart hergestellten, mehrlagigen Interferenzpigmente können in einen Lack zum Lackieren von Gebrauchsgegenständen, insbesondere von Fahrzeugkarosserien eingemischt werden. Solche Lacke werden auf einem Gebrauchsgegenstand, insbesondere einer Fahrzeugkarosserie oder einem Karosserieteil in der farbbestimmenden Decklage 6 der Lackierung 3 appliziert.

## Patentansprüche

1. Plättchenförmige, mehrlagig aufgebaute Interferenzpigmente (8, 9) für Effektlacke (6) zum Lackieren von Gebrauchsgegenständen (1), insbesondere von Fahrzeugkarosserien,
▷ bei denen zumindest eine Lage (14) der Interferenzpigmente (8, 9) aus flüssigkristallinen Polymeren (LCP) bestehen, deren Mesogene zumindest näherungsweise chiral-nematisch und/oder smektisch und/oder cholesterisch geordnet sind,
▷ bei denen ferner eine lichtabsorbierende Lage (11) in den Interferenzpigmenten (8, 9) vorgesehen ist, die zumindest für ein Teil des sichtbaren Lichtspektrums absorbierend ist und
▷ bei denen die Ränder der plättchenförmigen Interferenzpigmente (8, 9) als umfangsseitig unbeschichtete Bruchkanten (12) des Mehrlagenverbundes (13, 13') ausgebildet sind.

2. Interferenzpigmente nach Anspruch 1,
**dadurch gekennzeichnet,**
**daß** die Interferenzpigmente (8) dreilagig aufgebaut sind, wobei die lichtabsorbierende Lage (11) in der Mitte des Lagenverbundes (13) angeordnet ist.

3. Interferenzpigmente nach Anspruch 2,
**dadurch gekennzeichnet,**
**daß** die Interferenzpigmente (8) in ihrem Lagenaufbau nach lagenstärke und stofflicher Art der Beschichtung zu der mittleren Lage (11) zumindest angenähert symmetrisch aufgebaut sind.

4. Interferenzpigmente nach Anspruch 1,
**dadurch gekennzeichnet,**
**daß** die lichtabsorbierende Lage (11) im gesamten sichtbaren Lichtspektrum lichtabsorbierend, also schwarz ausgebildet ist.

5. Interferenzpigmente nach Anspruch 1,
**dadurch gekennzeichnet,**
**daß** die lichtabsorbierende Lage (11) innerhalb desjenigen Teilbereiches des sichtbaren Lichtspektrum lichtabsorbierend ausgebildet ist, der außerhalb einer der Farben der Interferenzpigmente (8, 9) liegt.

6. Interferenzpigmente nach Anspruch 1,
**dadurch gekennzeichnet,**
**daß** die lichtabsorbierende Lage (11) semitransparent ist.

7. Interferenzpigmente nach Anspruch 1,
**dadurch gekennzeichnet,**
**daß** die flüssigkristallinen Polymeren (LCP) der äußeren Lage(n) (14) der Interferenzpigmente (8, 9) nicht-thermisch vernetzend, insbesondere photovernetzbar oder elektronenstrahl-vernetzbar sind.

8. Interferenzpigmente nach Anspruch 1,
**dadurch gekennzeichnet,**
**daß** die Interferenzpigmente (8) eine Stärke (S) von etwa 3 bis 50 *µ*m aufweisen.

9. Interferenzpigmente nach Anspruch 1,
**dadurch gekennzeichnet,**
**daß** die plättchenförmigen Interferenzpigmente (8, 9) einen Durchmesser von 5 bis 100 µm, vorzugsweise von 10 bis 50 *µ*m aufweisen.

10. Verfahren zum Herstellen von plättchenförmigen Interferenzpigmenten, bei dem flüssigkristalline Polymere (LCP) in flüssigem Zustand auf eine glatte Unterlage als dünner Film aufgetragen und dabei die Mesogene zumindest näherungsweise chiral-nematisch und/oder smektisch und/oder cholesterisch geordnet werden, bei dem dieser Film ausgehärtet und zu Pigmenten verarbeitet wird, insbesondere zur Herstellung von Interferenzpigmenten nach Anspruch 1,
**gekennzeichnet durch** die Gemeinsamkeit folgender Merkmale:
▷ nach dem Aushärten des ersten Filmes (14) wird dieser zunächst noch auf der glatten Unterlage belassen und auf diesen Film eine Schicht (11) aus einem lichtabsorbierenden Farbstoff in einer eine Absorption bewirkenden Lagenstärke aufgebracht und ausgehärtet,
▷ erst anschließend wird dieser zweilagige ausgehärtete Film (13') von der Unterlage abgezogen und in plättchenförmige Partikel (9) zerkleinert.

11. Verfahren nach Anspruch 10,
**dadurch gekennzeichnet,**
**daß** nach dem Aushärten der lichtabsorbierenden Lage (11) der zweilagige Lagenverbund (13') zunächst noch weiter auf der glatten Unterlage belassen und auf dem auf der glatten Unterlage haftenden Lagenverbund (13') eine weitere, nach Zusammensetzung und Lagenstärke mit dem ersten Film (14) zumindest angenähert übereinstimmender Film (14) aufgetragen und ausgehärtet wird und
**daß** erst anschließend dieser dreilagige, ausgehärtete Film von der Unterlage abgezogen und in plättchenförmige Partikel (8) zerkleinert wird.

12. Verfahren zum Herstellen von plättchenförmigen Interferenzpigmenten, bei dem flüssigkristalline Polymere (LCP) in flüssigem Zustand auf eine Unterlage als dünner Film aufgetragen und dabei die Mesogene zumindest näherungsweise chiral-nematisch und/oder smektisch und/oder cholesterisch geordnet werden, bei dem dieser Film ausgehärtet und zu Pigmenten verarbeitet wird, insbesondere zur Herstellung von Interferenzpigmenten nach Anspruch 1,
**gekennzeichnet durch** die Gemeinsamkeit folgender Merkmale:
▷ als Unterlage wird eine Folie aus einem lichtabsorbierenden Farbstoff in einer eine Absorption bewirkenden Lagenstärke verwendet, auf die der Film aus flüssigkristallinen Polymeren (LCP) in flüssigem Zustand aufgetragen und ausgehärtet wird,
▷ anschließend wird dieser Lagenverbund aus Absorptionsfolie und ausgehärtete LCP-Film in plättchenförmige Partikel zerkleinert.

13. Verfahren nach Anspruch 12,
**dadurch gekennzeichnet,**
**daß** nach dem Aushärten der ersten LCP-Lage (14) der zweilagige Lagenverbund noch vor dem Zerkleinern in Pigmente auch auf die der ersten LCP-Lage gegenüberliegenden Seite eine weiteren LCP-Lage aufgebracht und diese ausgehärtet wird und daß erst anschließend dieser dreilagige ausgehärtete Film in plättchenförmige Partikel (8) zerkleinert wird.

14. Verfahren nach Anspruch 10 oder 12,
**dadurch gekennzeichnet,**
**daß** nach dem Zerkleinern des mehrlagigen Filmes (13, 13') die im Durchmesser (L) kleiner als die Filmstärke (S) messenden Partikel und die im Durchmesser (L) um mehr als das Zehnfache größer als die Filmstärke (S) messenden Partikel durch ein korngrößen-selektives Trennverfahren aussortiert und die übrig bleibenden Partikel als Interferenzpigmente (8, 9) verwendet werden.

15. Verfahren nach Anspruch 10 oder 12,
**dadurch gekennzeichnet,**
**daß** die Filme (14) aus flüssigkristallinen Polymeren in einer Stärke von etwa 3 bis 15 µm aufgetragen werden.

16. Lack zum Lackieren von Gebrauchsgegenständen, insbesondere von Fahrzeugkarosserien,
**dadurch gekennzeichnet, daß** in den Lack mehrlagige Interferenzpigmente (8, 9) nach einem der Ansprüche 1 bis 8 eingemischt sind.

17. Auf einem Gebrauchsgegenstand, insbesondere einer Fahrzeugkarosserie oder einem Karosserieteil applizierte Lackierung,
**dadurch gekennzeichnet,**
**daß** in die farbbestimmende Lage (6) der Lackierung (3) mehrlagige Interferenzpigmente (8, 9) nach einem der Ansprüche 1 bis 8 eingemischt sind.

## Claims

1. Platelet-type interference pigments (8, 9), for colour-effect lacquers (6), built up in several layers, for lacquering commodities (1), particularly vehicle bodywork,
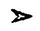 in which at least one layer (14) of the interference pigments (8, 9) is made of liquid crystal polymers (LCPs), the mesogens of which are at least approximately chiral-nematic and/or show smectic and/or cholesteric arrangement,
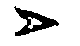 further, in which a light-absorbing layer (11) is provided in the interference pigments, which is absorptive for at least a part of the visible light spectrum and
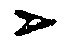 in which the rims of the platelet-type interference pigments (8, 9) arc developed as peripheral, uncoated fracture edges of the multi-layer composition (13, 13').

2. Interference pigments in accordance with claim 1,
**characterized in that**
the interference pigments (8) are triple-layered, whereby the light-absorbing layer (11) is disposed in the middle of the layered composition (13).

3. Imerference pigments in accordance with claim 2,
that the interference pigments (8) in their layered structure are built up approximately symmetrically, in relation to the middle layer (11), according to layer-thickness and material-type of the coating.

4. Interference pigments in accordance with claim 1,
**characterized in that**
the light-absorbing layer (11) is developed such that it absorbs light over the whole visible spectrum, that is, it is black.

5. Interference pigments in accordance with claim 1,
**characterized in that**
the light-absorbing layer (11) is developed within that partial range of the visible light spectrum which lies outside of one of the colours of the interference pigments (8, 9).

6. Interference pigments in accordance with claim 1,
**characterized in that**
the light-absorbing layer (11) is semi-transparent.

7. Interference pigments in accordance with claim 1,
**characterized in that**
the LCPs of the outer layer(s) (14) of the interference pigments (8, 9) are non-thermally cross-linking, and can, in particular, be cross-linked using light or an electron beam.

8. Interference pigments in accordance with claim 1,
**characterized in that**
the interference pigments (8) have a thickness (T) of approximately 3 to 50 µm.

9. Interference pigments in accordance with claim 1,
**characterized in that**
the platelet-type interference pigments (8, 9) have a diameter of 5 to 100 µm, preferably of 10 to 50 µm.

10. Process for producing platelet-form interference pigments in which LCPs are applied as a thin film in liquid form, to a smooth base, and in that the mesogens are thereby at least nearly chiral-nematic and/or smectic and/or cholesteric in arrangement, and in which this film is hardened and is processed to form pigments, particularly for producing interference pigments in accordance with claim 1,
**characterized by** all of the following characteristics:
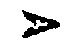 after the hardening of the first film (14) the latter is at first left on the smooth base, and a layer (11) of light-absorbing colour is applied, in a thickness which effects absorption, onto this film, and is hardened,
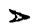 only then is this double-layered, hardened film (13') removed from the base and reduced to platelet-form particles (9).

11. Process in accordance with claim 10,
**characterized in that**,
after the light-absorbing layer (11) has set, the double-layered composition (13') is for the time being left further on the smooth base and a further film (14), which at least nearly corresponds to the composition and thickness of the first film (14), is applied, onto the layered composition (13') which is adhering to the smooth base, and is hardened, and only then is this triple-layered, hardened film removed from the base and broken up into particles (8) in platelet form.

12. Process for producing platelet-form interference pigments, in which LCPs, in a liquid state, are applied to a base as a thin film and the mesogens are thereby at least nearly chiral-nematic and/or smectic and/or choiesteric in arrangement, and in which this film is hardened and is processed to form pigments, particularly for producing interference pigments in accordance with claim 1,
**characterized by** all of the following characteristics:
▷ a sheet of light-absorbing colour, of a thickness which brings about absorption, is used as a base on which the film of LCP in a liquid state is applied and hardened,
▷ then this composition of an absorption sheet and hardened LCP-film is broken up into particles in the form of platelets.

13. Process in accordance with claim 12,
**characterized in that**,
after the hardening of the first LCP-layer (14), the double-layered composition has, also on the opposite side, a further LCP-layer applied to it and hardened, before being broken up into pigments, and **in that** only then is this triple-layered, hardened film broken up into particles (8) in platelet form.

14. Process in accordance with claim 10 or 12,
**characterized in that**,
having broken up the multi-layer film (13, 13'), the particles measuring less than the film-thickness (T) in diameter (L) and the particles measuring more than ten times the film-thickness (T) are removed using a grain-size separation process and the remaining particles are used as interference pigments (8, 9).

15. Process in accordance with claim 10 or 12,
**characterized in that**
the films (14) of liquid crystal polymers are applied in a thickness of some 3 to 15 µm.

16. Lacquer for lacquering commodities, particularly vehicle bodywork,
**characterized in that**
multi-layered interference pigments (8, 9) in accordance with one of claims 1 to 8, are mixed into the lacquer.

17. Lacquering applied onto a commodity, particularly to vehicle bodywork or part of vehicle bodywork,
**characterized in that**
multi-layered interference pigments (8, 9) in accordance with one of claims 1 to 8 are mixed into the layer (6), of the lacquering (3), which determines the colour.

## Revendications

1. Pigments d'interférence (8, 9), lamellaires et à structure multicouche, pour vernis à effet décoratif (6), pour peindre des objets d'usage (1), en particulier des carrosseries d'automobile,
• dans lesquels au moins une couche (14) des pigments d'interférence (8, 9) est constituée de polymères cristaux liquides (LCP), dont les mésogènes sont disposés au moins approximativement selon une structure chirale-nématique et/ou smectique et/ou cholestérique,
• dans lesquels on prévoit en outre une couche (11) absorbant la lumière dans les pigments d'interférence (8, 9), qui a un effet d'absorption d'au moins une partie du spectre visible de la lumière, et
• dans lesquels les bords des pigments d'interférence lamellaires (8, 9) sont conformés comme des arêtes de rupture (12), non-revêtues sur leur périphérie, du système multicouche (13, 13').

2. Pigments d'interférence selon la revendication 1, **caractérisés en ce que** les pigments d'interférence (8') ont une structure tricouche, la couche (11) absorbant la lumière étant disposée au milieu du système de couches (13).

3. Pigments d'interférence selon la revendication 2, **caractérisés en ce que** les pigments d'interférence (8), dans leur système de couches, sont disposés d'une manière au moins approximativement symétrique, par rapport à la couche centrale (11), pour ce qui est de l'épaisseur des couches et de la nature du matériau du revêtement.

4. Pigments d'interférence selon la revendication 1, **caractérisés en ce que** la couche (11) absorbant la lumière absorbe la totalité de la lumière dans le spectre visible, et est donc noire.

5. Pigments d'interférence selon la revendication 1, **caractérisés en ce que** la couche (11) absorbant la lumière a un effet d'absorption de la lumière dans la partie du spectre visible de la lumière qui se trouve à l'extérieur de l'une des couleurs des pigments d'interférence (8, 9).

6. Pigments d'interférence selon la revendication 1, **caractérisés en ce que** la couche (11) absorbant la lumière est semi-transparente.

7. Pigments d'interférence selon la revendication 1, **caractérisés en ce que** les polymères cristaux liquides (LCP) de la ou des couches extérieures (14) des pigments d'interférence (8, 9) ne peuvent subir de thermoréticulation, et peuvent subir en particulier une photoréticulation ou une réticulation sous l'effet d'un faisceau d'électrons.

8. Pigments d'interférence selon la revendication 1, **caractérisés en ce que** les pigments d'interférence (8) ont une épaisseur (S) d'environ 3 à 50 µm.

9. Pigments d'interférence selon la revendication 1, **caractérisés en ce que** les pigments d'interférence lamellaires (8, 9) ont un diamètre de 5 à 100 µm, de préférence de 10 à 50 µm.

10. Procédé de fabrication de pigments d'interférence lamellaires, dans lequel des polymères cristaux liquides (LCP) sont, à l'état liquide, appliqués sur un subjectile lisse sous forme d'un film mince, les mésogènes étant à cette occasion disposés au moins approximativement selon une structure chirale-nématique et/ou smectique et/ou cholestérique, procédé dans lequel ce film est durci et est mis en oeuvre pour donner des pigments, en particulier pour fabriquer des pigments d'interférence selon la revendication 1, **caractérisé par** l'ensemble des éléments suivants :
• après le durcissement complet du premier film (14), ce dernier est d'abord abandonné encore sur le subjectile lisse, et on applique sur ce film une couche (11) d'un colorant absorbant la lumiére, sur une épaisseur de couche assurant l'absorption, et on la durcit,
• seulement ensuite, ce film bicouche durci (13') est enlevé par pelage du subjectile, et est broyé pour donner des particules lamellaires (9).

11. Procédé selon la revendication 10, **caractérisé en ce que**, après le durcissement de la couche (11) absorbant la lumière, on abandonne d'abord pendant encore un certain temps sur le subjectile lisse le système bicouche (13'), et, sur le système de couches (13') qui adhère au subjectile lisse, on applique un autre film (14), qui d'une manière au moins approximative coïncide de par sa position et l'épaisseur des couches au premier film (14), et on le durcit, et **en ce que**, seulement ensuite, on enlève par pelage du subjectile ce film tricouche durci, et on le broie pour obtenir des particules lamellaires (8).

12. Procédé de fabrication de pigments d'interférence lamellaires, dans lequel des polymères cristaux liquides (LCP), à l'état liquide, sont appliqués sur un subjectile sous forme d'un film mince, les mésogènes étant alors au moins approximativement disposés selon une structure chirale-nématique et/ou smectique et/ou cholestérique, où ce film subit un durcissement et est mis en oeuvre pour donner des pigments, en particulier pour fabriquer des pigments d'interférence selon la revendication 1, **caractérisé par** l'ensemble des éléments suivants :
• en tant que subjectile, on utilise une feuille d'un colorant absorbant la lumière, sur une épaisseur de couche à effet d'absorption, feuille sur laquelle le film constitué de polymères cristaux liquides (LCP) est appliqué à l'état liquide et durci,
• puis ce système de couches constitué de la feuille absorbante et du film LCP durci est broyé pour donner des particules lamellaires.

13. Procédé selon la revendication 12, **caractérisé en ce que**, après durcissement de la première couche (14) de LCP, le système bicouche est, encore avant le broyage conduisant à des pigments, appliqué sur la face, opposée à la première couche de LCP, d'une autre couche de LCP, et on la durcit, et **en ce que** seulement ensuite on broie pour obtenir des particules lamellaires (8) ce film tricouche durci.

14. Utilisation selon la revendication 10 ou 12, **caractérisée en ce que**, après broyage du film multicouche (13, 13'), on trie par un procédé de séparation à sélectivité granulométrique les particules dont le diamètre (L) est inférieur à l'épaisseur (S) du film et les particules dont le diamètre (L) est plus de dix fois supérieur à l'épaisseur (S) du film, et on utilise en tant que pigments d'interférence (8, 9) les particules restantes.

15. Procédé selon la revendication 10 ou 12, **caractérisé en ce que** les films (14) constitués de polymères cristaux liquides sont appliqués sur une épaisseur d'environ 3 à 15 µm.

16. Peinture pour peindre des objets d'usage, en particulier des carrosseries automobiles, **caractérisée en ce qu'**on incorpore par mélange dans la peinture des pigments d'interférence multicouches (8, 9) selon l'une des revendications 1 à 8.

17. Peinture appliquée sur un objet d'usage, en particulier une carrosserie automobile ou un élément de carrosserie, **caractérisée en ce qu'**on incorpore par mélange dans la couche (6) de la peinture (3) définissant la couleur des pigments d'interférence multicouches (8, 9) selon l'une des revendications 1 à 8.
